# FASCICULE DE BREVET EUROPEEN

(11) **EP 1 405 926 B1**
(45) Date de publication et mention de la délivrance du brevet: **30.05.2007**
(21) Numéro de dépôt: 03292430.0
(22) Date de dépôt: 02.10.2003
(51) Int. Cl.: C21D 9/00, C21D 1/10, C21D 1/42

(54) **Installation de trempe par induction, notamment pour la fabrication d'éléments de suspension**
Vorrichtung zum Induktionshärten, insbesondere zum Herstellen von Aufhängungselementen
Induction hardening device, especially for manufacturing suspension elements

(30) Priorité: 02.10.2002 FR 0212170
(43) Date de publication de la demande: 07.04.2004
(73) Titulaire: ALLEVARD REJNA AUTOSUSPENSIONS, 92210 Saint-Cloud (FR)
(72) Inventeur: Lecoester, Francois, 59500 Douai (FR)
(74) Mandataire: Barbin le Bourhis, Joël

(56) Documents cités:
- EP-A- 1 052 295
- FR-A- 2 160 567
- US-B1- 6 290 898
- PATENT ABSTRACTS OF JAPAN vol. 2000, no. 01, 31 janvier 2000 (2000-01-31) & JP 11 269550 A (HONDA MOTOR CO LTD;SHOWA CORP), 5 octobre 1999 (1999-10-05)
- PATENT ABSTRACTS OF JAPAN vol. 2000, no. 03, 30 mars 2000 (2000-03-30) & JP 11 350024 A (YSK CORPORATION:KK), 21 décembre 1999 (1999-12-21)
- PATENT ABSTRACTS OF JAPAN vol. 2000, no. 04, 31 août 2000 (2000-08-31) & JP 2000 024737 A (MITSUBISHI MOTORS CORP), 25 janvier 2000 (2000-01-25)

## Description

L'invention concerne une installation de trempe thermique pour traiter un élément métallique allongé, tel que notamment un élément de la suspension d'un véhicule automobile comme par exemple une barre anti-dévers, un bras de barre active ou autre.

L'invention s'applique tout particulièrement au traitement thermique d'un élément devant posséder une bonne tenue à la fatigue, c'est à dire supporter des efforts répétés, notamment de torsion et/ou flexion, au cours de sa durée d'usage. L'invention vise plus particulièrement une nouvelle installation de trempe thermique par chauffage à induction. Elle concerne aussi un procédé de fabrication d'un élément métallique incluant une telle trempe thermique.

Dans le domaine de l'automobile, certains éléments du système de suspension doivent, au cours de leur durée d'usage, supporter des sollicitations répétées. Lors de la conception d'un tel élément, on définit un certain nombre de traitements permettant d'augmenter sa résistance à la fatigue. Pour évaluer l'efficacité de ces traitements et par conséquent la longévité de l'élément, on a défini des cycles de sollicitation normalisés qui consistent à appliquer audit élément une succession de déformations, jusqu'à rupture. On cherche actuellement à garantir qu'aucune rupture ne puisse apparaître en dessous cent mille cycles. Les calculs effectués pour la mise au point de tels éléments font apparaître que certaines parties de l'élément sont plus sujettes à la rupture que d'autres, notamment les coudes. Ce sont donc principalement ces parties qui nécessitent d'être traitées pour garantir une tenue au moins égale à cent mille cycles. Par exemple, la résistance à la fatigue d'une barre anti-dévers est évaluée en imposant aux deux extrémités de la barre des cycles de débattement opposés et en comptant le nombre de cycles avant rupture. Des essais analogues peuvent être définis pour évaluer la résistance à la fatigue d'un bras de barre active ou de tout autre élément de géométrie comparable. Le problème de la détermination de la résistance à la fatigue de ces éléments devient de plus en plus crucial, principalement en raison de deux tendances :
- les véhicules sont de plus en plus lourds en raison du nombre croissant d'équipements électroniques embarqués et de l'augmentation de la motorisation.
- Les constructeurs ont tendance à définir des barres stabilisatrices dont l'axe longitudinal est très peu décalé par rapport aux axes passant par les centres des roues. Dans ces conditions, les bras des barres stabilisatrices sont plus courts et, pour une même course de roues, l'amplitude des déplacements des extrémités de la barre augmente tout comme les niveaux de contrainte auxquels la barre est soumise.

En outre, dans le cas des véhicules à quatre roues motrices, les déflexions aux extrémités de la barre stabilisatrice sont encore plus importantes en raison de la recherche d'une aptitude au franchissement d'obstacle.

L'un des traitements pour augmenter la résistance à la fatigue d'une barre stabilisatrice ou élément analogue consiste à lui appliquer une trempe thermique. Selon les procédés utilisés, cette trempe intervient avant ou après la conformation de la barre, c'est à dire les opérations de cintrage. Plusieurs principes sont connus.

Une première méthode consiste à appliquer un traitement austénitique à une barre, dans un four, puis à la cintrer à chaud en veillant à ce que la température de la barre reste suffisamment élevée pour que l'acier reste dans le domaine austénitique. La barre est ensuite trempée dans son ensemble par immersion dans un liquide. On admet que ce processus de cintrage à chaud suivi d'une trempe globale ne permet pas de produire des barres fortement sollicitées. Il ne s'applique qu'à la fabrication de barres stabilisatrices pleines.

Un autre procédé consiste à cintrer à froid une barre pleine, à la chauffer par conduction en positionnant ses deux extrémités entre les électrodes d'un équipement de chauffe par conduction et à procéder ensuite à une trempe. La trempe de la barre conduit à une transformation martensitique à coeur de celle-ci sous réserve d'une austénitisation complète de l'acier, obtenue pendant la phase de chauffage par conduction. Ce procédé est lent et coûteux.

Quelques tentatives ont été faites portant sur le cintrage à froid suivi d'une trempe consistant à faire défiler un inducteur et une douche mobile le long de l'élément. Une installation pareille est divulguée dans EP-A-1 052 295. En outre, JP-A-11 269 550 divulgue une installation de trempe pour pièces allongées comportant des moyens pour faire passer ladite pièce au travers d'une bobine d'induction ainsi que des moyens de refroidissement en aval de ladite bobine. Un tel procédé a été jugé extrêmement lent et difficilement exploitable en raison des pertes électriques qui se produisent dans la liaison souple alimentant l'inducteur mobile.

D'autre part, on connaît aussi des barres anti-dévers creuses, c'est à dire fabriquées à partir d'un tube, de préférence à épaisseur variable pour pouvoir disposer d'une épaisseur plus importante aux coudes ou à d'autres régions fortement sollicitées. La barre est cintrée à froid et subit ensuite un traitement d'austénitisation dans un four à atmosphère contrôlée suivi d'une trempe. La barre tubulaire est ensuite soumise à un traitement de revenu pendant une heure à 200°C et elle est ensuite grenaillée en interne, la grenaille étant injectée au moyen d'une buse. Dans ce procédé, la barre est trempée dans son intégralité, ce qui complique le forgeage des extrémités qui doit être réalisé à chaud.

L'invention comme elle est définie selon la revendication 1 propose une installation de trempe thermique susceptible d'être mise en oeuvre pour tout type d'élément métallique allongé, notamment conformé à partir d'une barre pleine ou creuse.

Plus particulièrement, l'invention concerne une installation de trempe thermique pour élément métallique allongé, comme par exemple un élément de suspension de véhicule automobile, caractérisé en ce qu'il comporte :
- des moyens de chauffage par induction comprenant une bobine d'induction fixe,
- des moyens de manipulation comprenant un premier robot multiaxe portant ledit élément métallique et agencés pour faire passer ledit élément au travers de ladite bobine d'induction suivant un trajet prédéterminé pour varier l'orientation dudit élément par rapport à la bobine, et
- des moyens de refroidissement agencés en aval de ladite bobine d'induction par rapport au sens de déplacement dudit élément.

Selon un mode de réalisation préféré, les moyens de manipulation sont agencés pour déplacer l'élément objet du traitement en sorte qu'une fibre neutre de celui-ci traverse la bobine sensiblement au centre de celle-ci, ou le plus près possible de ce centre compte tenu de sa configuration.

La géométrie de la bobine peut être adaptée à la forme de l'élément traité, notamment à la forme de sa section de façon à ce que chaque point du contour de l'élément (plus particulièrement de la partie de celui-ci qui est engagée à un moment donné dans la bobine) soit sensiblement à la même distance des spires de la bobine, de façon à garantir un chauffage relativement uniforme de l'élément. Dans le cas le plus courant où l'élément a une section circulaire, il suffit de maîtriser le déplacement de l'élément, de façon que le centre de la partie engagée dans la bobine soit toujours sensiblement confondu avec le centre de la bobine, celle-ci ayant globalement la forme d'un anneau à contour circulaire.

Ledit premier robot est programmé pour engager l'élément et le faire défiler à l'intérieur de la bobine fixe. Pour ce faire, le bras du robot porte un support muni de pinces escamotables, espacées les unes des autres, ce qui permet de tenir l'élément pendant son passage au travers de la bobine. Les moyens de refroidissement peuvent être constitués par une simple cuve de liquide de refroidissement placée au voisinage de la zone d'activité des moyens de manipulation, par exemple, à proximité de la bobine d'induction.

Selon un mode de réalisation préféré, les moyens de refroidissement peuvent comporter une douche de structure annulaire, dimensionnée pour pouvoir être traversée par l'élément, ceci juste en aval de la bobine d'induction. On peut ainsi obtenir une trempe assez rapide. Dans ce cas, la bobine d'induction est de préférence sensiblement horizontale. De cette façon, la douche peut être disposée sous la bobine et à proximité immédiate de celle-ci, les jets de liquide de refroidissement étant dirigés vers l'élément et vers le bas pour limiter au maximum le risque que des gouttelettes de liquide jaillissent dans la zone de chauffage définie par la bobine.

Comme on le verra plus loin, il y a un intérêt particulier à ce que le refroidissement s'effectue assez rapidement après l'échauffement localisé par induction. Il est donc avantageux que la douche soit placée à proximité de la bobine. Elle peut être portée par un second robot multi-axe opérant en synchronisme avec le premier robot, ce qui permet de faire varier sa position et son orientation en fonction de la géométrie de l'élément à traiter, tout en la maintenant au plus près de la bobine d'induction, sans interférer avec ce dernier.

L'invention selon la revendication 9 concerne également un procédé de fabrication d'un élément métallique allongé, caractérisé en ce qu'il comporte une étape de trempe thermique consistant à faire passer ledit élément au travers d'une bobine d'induction fixe en le manipulant avec un robot multiaxe variant son orientation par rapport à la bobine, ladite bobine faisant partie de moyens de chauffage par induction et à refroidir l'élément en aval de ladite bobine d'induction.

Si l'élément est élaboré dans une barre métallique pleine, coudée, il y a avantage à opérer une trempe superficielle pour obtenir une zone externe à structure martensitique et une zone de coeur à structure ferritoperlitique. Ces deux zones sont séparées par une zone de transition d'épaisseur relativement faible et maîtrisée. On a trouvé que la trempe superficielle, dans une barre pleine a pour effet de créer des contraintes de compression dans celle-ci, qui augmentent considérablement la tenue en fatigue de la zone traitée.

Lorsque l'élément de suspension est élaboré dans une barre métallique tubulaire, on réalise une trempe sur une profondeur telle qu'une structure martensitique soit créée sur la totalité de l'épaisseur de la barre tubulaire. Le traitement a pour conséquence d'améliorer la structure cristalline du métal, pour une bonne tenue à la fatigue. On peut ensuite procéder à un grenaillage interne de la barre tubulaire, qui permet d'introduire, d'une autre façon, des contraintes de compression dans la structure de la barre creuse, ce moyen étant connu en soi pour améliorer la tenue en fatigue de la partie traitée. On met en oeuvre de préférence un grenaillage intérieur libre en injectant la grenaille directement par une extrémité.

L'invention apparaîtra plus clairement à la lumière de la description qui va suivre d'une installation de trempe thermique conforme à son principe, donnée uniquement à titre d'exemple et faite en référence aux dessins annexés dans lesquels :

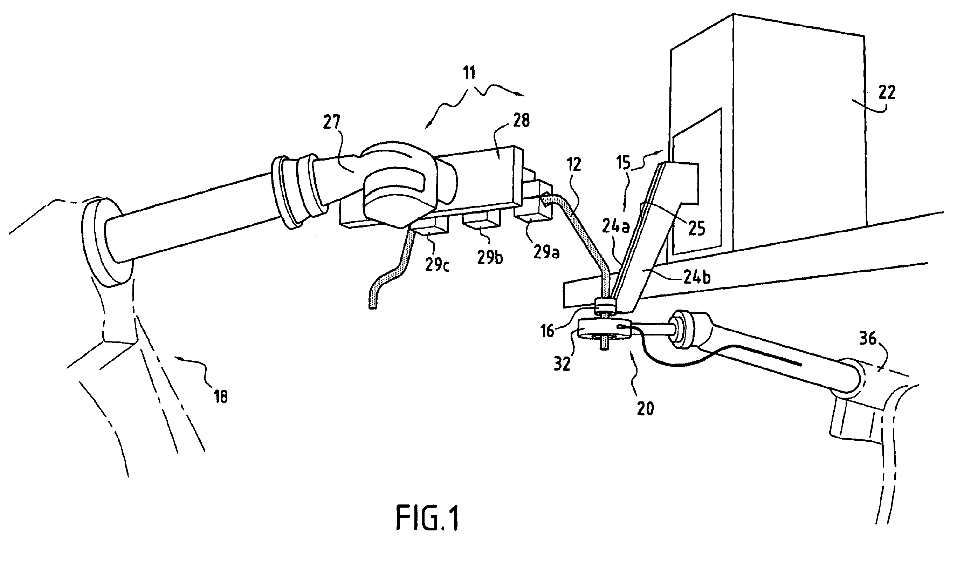

- la figure 1 est une vue schématique partielle d'une installation de trempe thermique plus particulièrement adaptée au traitement d'une barre anti-dévers de véhicule automobile ;
- la figure 2 est une vue schématique en élévation et avec coupe partielle, illustrant la mise en oeuvre du procédé ;
- la figure 3 est une vue schématique selon la flèche III de la figure 2 ;
- les figures 4 à 6 sont des vues semblables à la figure 3 illustrant différentes étapes du processus de trempe thermique ; et
- la figure 7 est une coupe longitudinale d'une barre tubulaire, avant cintrage.

L'installation 11 telle que représentée est plus particulièrement conçue pour le traitement thermique par chauffage à induction localisé d'un élément métallique allongé 12 qui est, dans l'exemple représenté, une barre anti-dévers d'un système de suspension d'un véhicule automobile. Cet élément, à ce stade de la fabrication, se présente sous la forme d'une barre cylindrique pleine, en acier, préformée à froid selon une technique connue. Comme on le verra plus loin, la même installation peut être utilisée pour le traitement thermique d'une barre creuse ou un bras de barre active, etc... L'élément à traiter est ici fabriqué à partir d'une barre cylindrique en acier faiblemment allié. Cet élément, après conformation à froid, fait l'objet d'une trempe superficielle mise en oeuvre par l'installation représentée. A l'issue de cette trempe superficielle, les parties de l'élément trempées superficiellement seront constituées d'une zone de surface à structure martensitique et d'une zone de coeur ferritoperlitique, ces deux zones étant séparées par une zone de transition où coexistent les structures ferritoperlitiques et martensitiques. On sait que la structure martensitique est une structure cristalline très dure et très résistante à la fatigue, c'est-à-dire vis-à-vis des efforts de torsion ou de flexion. Il est donc intéressant en soi de créer une structure martensitique au moins dans les parties de la pièce les plus sollicitées. Dans le cas présent cependant, où on réalise une trempe superficielle, la zone traitée à structure martensitique se trouve en compression du fait que la zone de coeur (ferritoperlitique) n'a pas été dilatée. Les contraintes de compression ainsi crées dans la zone martensitique ont pour effet d'augmenter encore la tenue en fatigue de l'élément traité.

Pour réaliser ce type de trempe thermique, l'invention met en oeuvre des moyens de chauffage par induction 15 comprenant une bobine d'induction fixe 16. Le fait que la bobine soit fixe présente de nombreux avantages, comme on le verra plus loin. L'installation comprend aussi des moyens de manipulation 18 agencés pour faire passer l'élément 12 au travers de la bobine d'induction 16, suivant un trajet prédéterminé. Enfin, des moyens de refroidissement 20 sont agencés en aval de la bobine d'induction par rapport au sens de déplacement de l'élément. Dans l'exemple représenté, les moyens de chauffage 15 comportent une bobine de quelques spires de forte section, directement reliée à un coffret d'adaptation 22 comportant notamment un système capacitif et un générateur haute fréquence, d'une fréquence choisie pour créer des conditions de résonance dans le circuit oscillant comprenant la bobine et le système capacitif. Cette bobine 16 est reliée au coffret d'adaptation par deux larges barres métalliques 24a, 26b, de forte section, plates et accolées, séparées par un isolant 25 de sorte que les pertes de puissance entre la bobine et le coffret d'adaptation sont minimes. Le choix de la fréquence permet d'obtenir la profondeur de pénétration désirée en fonction de la pièce à traiter. Avec un tel système de chauffage, le temps nécessaire pour élever en température le tronçon de barre qui se trouve placé dans la bobine 16 à un moment donné est relativement faible et compatible avec le temps nécessaire pour opérer le cintrage à froid de sorte qu'un processus automatique et à fonctionnement continu peut être envisagé.

Les moyens de manipulation 18 sont agencés pour déplacer l'élément 12 précintré, de sorte qu'une fibre neutre de celui-ci traverse la bobine 16 sensiblement au centre de celle-ci. Dans l'exemple, ces moyens de manipulation comprennent un premier robot multiaxe 27. L'extrémité du bras de ce robot est équipée d'un support 28 muni de pinces escamotables 29a, 29b, 29c, espacées les unes des autres sur ledit support, pour tenir l'élément 12 pendant son passage au travers de la bobine. La barre est constamment maintenue par au moins deux pinces fermées, lesdites pinces s'ouvrant et se fermant au fur et à mesure de la progression de l'élément 12 au travers de la bobine pour éviter qu'une partie quelconque du robot ou du support n'entre en contact avec celle-ci. Dans l'exemple, le support porte trois pinces dont l'une est montée à coulissement libre, en l'occurrence la pince 29c qui se trouve la plus éloignée de la bobine lorsqu'on commence à engager l'élément à traiter dans celle-ci.

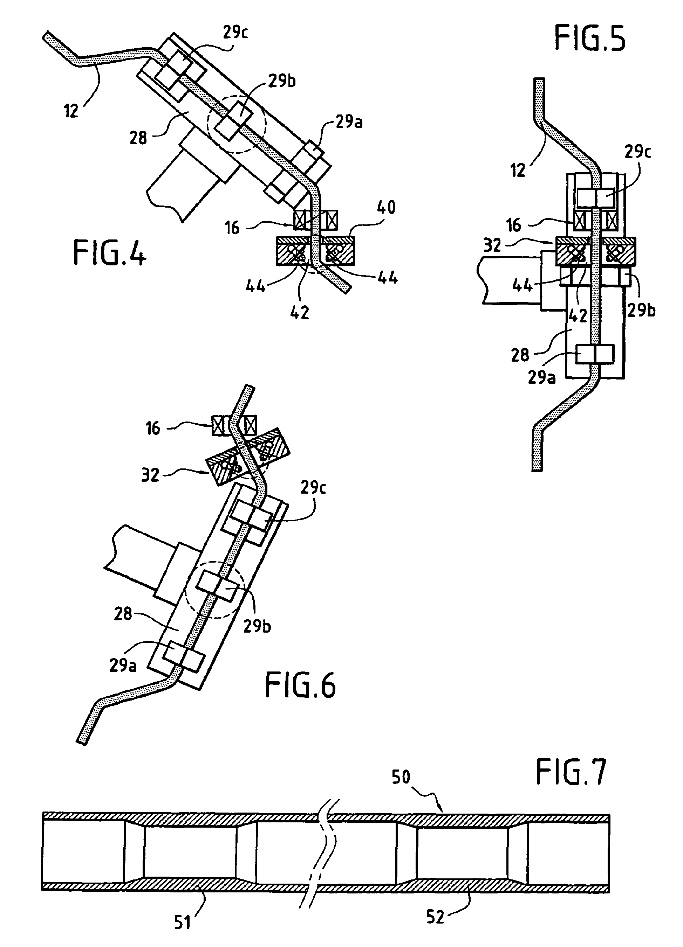

Comme représenté, la bobine d'induction 16 est sensiblement horizontale, le robot 27 engageant l'élément 12 par la face supérieure de la bobine. Ainsi, les moyens de refroidrissement 20 peuvent être agencés immédiatement en-dessous de la bobine, ce qui permet d'obtenir un refroidissement très brutal et rapide au fur et à mesure que l'élément 12 sort de la bobine. C'est pourquoi, avantageusement, ces moyens de refroidissement comportent ici une douche 32 de structure annulaire, dimensionnée pour pouvoir être traversée par l'élément 12. Cette douche est positionnée en aval de la bobine d'induction 16 (par rapport au sens de déplacement de l'élément) et à proximité immédiate de celle-ci. Comme l'élément comporte une pluralité de coudes, il est avantageux de pouvoir faire varier la position et l'orientation de la douche 32 par rapport à la bobine (voir par exemple figure 6) pour que la douche puisse être maintenue au plus près de la bobine. C'est pourquoi, elle est portée par un second robot multiaxe 36 opérant en synchronisme avec le premier robot 27. De plus, la douche comporte une face d'entrée 40, munie d'un passage central au travers duquel on engage l'élément 12 à sa sortie de la bobine. Ce passage est prolongé vers le bas par une cavité d'aspersion 42 globalement tronconique dans laquelle sont installées des buses 44 de projection de fluide de refroidissement, typiquement de l'eau. Ces buses sont orientées sensiblement vers l'axe du passage central mais en aval de celui-ci. Le fait de coordonner les mouvements des deux robots, par une programmation adéquate actuellement à la portée de l'homme du métier, permet donc d'obtenir un refroidissement de l'élément 12 au fur et à mesure que celui-ci traverse la bobine, pour obtenir la transformation martensitique. La face d'entrée 40 de la douche forme une sorte d'écran qui permet d'éviter des projections d'eau vers la bobine à l'intérieur de laquelle le métal est chauffé à blanc. Ce type de refroidissement permet de minimiser et de contrôler l'épaisseur de la zone de transition dans la structure de l'élément. En effet, on s'est aperçu que les contraintes résiduelles de compression en surface, recherchées, sont d'autant plus importantes que cette zone de transition est de faible épaisseur. L'invention mettant en oeuvre une bobine d'induction fixe, permet d'optimiser les résultats car l'épaisseur de la zone de transition dépend de la promptitude à réaliser le refroidissement de l'acier une fois que celui-ci a été austénitisé. Or, le chauffage par induction à bobine fixe permet une montée en température très rapide et un refroidissement au fur et à mesure, juste à la sortie de la bobine. En raison des faibles pertes, le chauffage par induction peut être beaucoup plus rapide que si on déplaçait un inducteur le long de l'élément. En outre, notamment grâce au robot 27, on peut facilement faire varier la vitesse de déplacement de l'élément 12 au travers de l'inducteur pour ne traiter que les zones nécessitant d'être trempées, notamment les coudes. La profondeur de trempe peut aussi être adaptée en jouant sur la vitesse de passage de l'élément et/ou sur la fréquence du courant alternatif alimentant la bobine.

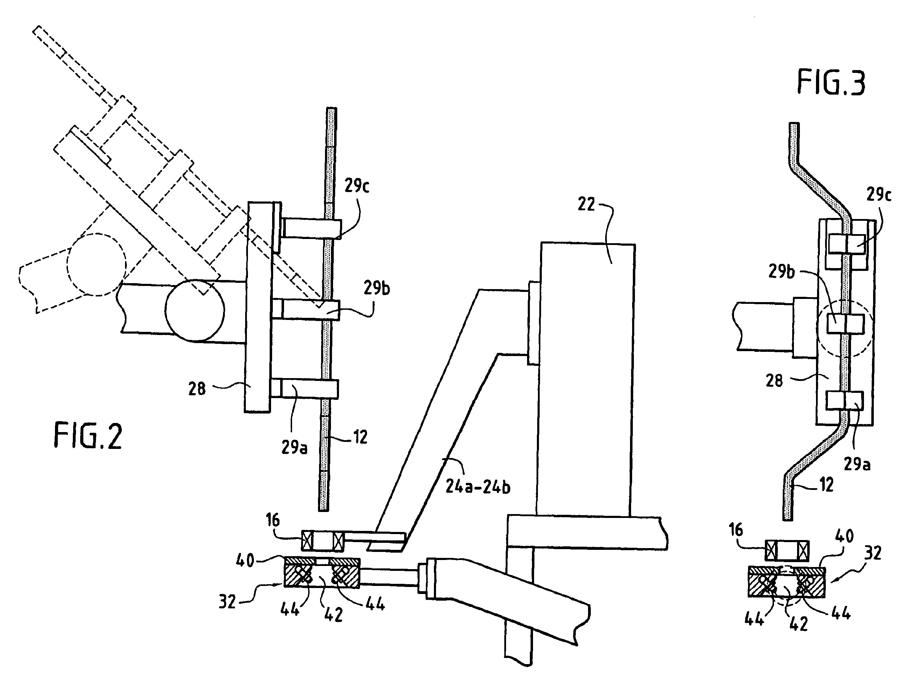

La mise en oeuvre de l'installation est plus clairement explicitée sur les figures 3 à 6. Au début du traitement, l'élément à traiter 12 est maintenu dans sa partie centrale par les trois pinces 29a-29c. Le robot 27, programmé en conséquence engage une portion d'extrémité du tronçon dans l'ouverture supérieure de la bobine. L'extrémité proprement dite n'est pas traitée (le passage peut se faire rapidement) pour permettre un forgeage ultérieur de l'extrémité de l'élément traité. Ce forgeage a pour but de réaliser une patte de fixation à l'extrémité de l'élément. Puis, le robot 27 s'oriente et se déplace pour que l'élément s'engage progressivement dans la bobine 16, tout en faisant en sorte que le tronçon engagé dans ladite bobine soit toujours, autant que faire se peut, situé au centre de celle-ci. Par exemple, en considérant la figure 4, on voit que la position et l'orientation du robot ont changé pour passer le premier coude de l'élément. A ce moment, il devient nécessaire d'ouvrir la première pince pour pouvoir poursuivre le traitement, c'est-à-dire continuer à engager l'élément dans la bobine de l'inducteur. Lorsque la partie de l'élément 12 que la première pince vient enserrer a dépassé la douche, ladite pince se referme et c'est la seconde pince 29b qui s'ouvre pour poursuivre le traitement. Pendant cette partie du traitement (figure 5) l'élément est donc maintenant entre la première pince 29a et la troisième 29c, mobile en translation. Pendant cette période, la dilatation longitudinale de la barre ne risque pas de se traduire par un flambage puisque la troisième pince est mobile. Le traitement se poursuit par la fermeture de la seconde pince et l'ouverture de la troisième jusqu'à ce que le point de serrage de la troisième pince soit dépassé.

La trempe par induction à bobine fixe telle qu'elle vient d'être décrite se poursuit par des opérations connues et classiques, telles que le forgeage des extrémités, à chaud, un grenaillage extérieur et des opérations de phosphatation et de peinture.

Il ressort de ce qui précède que la mise en oeuvre de l'invention au traitement thermique d'un élément en acier plein se caractérise principalement par une étape de trempe thermique consistant à faire passer l'élément au travers d'une bobine d'induction fixe faisant partie de moyen de chauffage par induction et à refroidir l'élément en aval de la bobine d'induction, de préférence au plus près de celle-ci. Dans le cas d'un élément métallique plein, on peut régler l'installation pour obtenir une trempe superficielle permettant de créer une zone externe à structure martensitique et une zone de coeur à structure ferritoperlitique, la coexistence de ces deux zones, coaxialement, se traduisant par l'apparition de contraintes résiduelles de compression favorables à la tenue en fatigue de l'élément.

L'installation qui vient d'être décrite peut aussi être mise en oeuvre, à des réglages près, pour le traitement d'un élément métallique creux, c'est-à-dire élaboré dans une barre tubulaire. Par exemple, on a représenté sur la figure 7 une barre tubulaire 50 d'épaisseur variable, avant cintrage, destinée à être conformée et traitée pour constituer une barre anti-dévers d'un véhicule automobile. Les parties les plus épaisses 51, 52 correspondent aux parties de la barre qui seront soumises aux plus fortes sollicitations, notamment les coudes. Il est avantageux de réaliser une telle barre à partir d'un tronçon tubulaire de diamètre extérieur constant et de diamètre intérieur variable. On fait coïncider les parois de forte épaisseur avec les parties cintrées de la barre qui sont les plus sollicitées. Par exemple, on peut disposer d'un tube étiré à paroi d'épaisseur variable directement disponible à l'état "NBK". Après écroutage, on procède au cintrage à froid donnant sa forme à la barre, avant l'étape de trempe par induction. Si on ne dispose pas d'un tube étiré à paroi d'épaisseur variable, on peut partir d'une ébauche tubulaire métallique à l'état "NBK", procéder à l'écroutage puis à un martelage définissant les zones d'épaisseur variable. Le martelage est suivi d'une stabilisation à 600° C pendant une heure avant de procéder au cintrage à froid.

Ensuite, la trempe par induction est réalisée de la même façon, à l'aide de la même installation. On réalise cependant une trempe sur une profondeur propre à créer la structure martensitique sur la totalité de l'épaisseur de la barre tubulaire. Comme précédemment, on peut localiser le traitement aux seules parties qui seront ultérieurement fortement sollicitées. Il est par exemple avantageux de ne pas traiter les extrémités, ce qui permet de les forger ultérieurement, à froid. La trempe par induction est particulièrement bien adaptée du fait que le diamètre extérieur du tube est constant, ce qui permet de mieux maîtriser la valeur de l'entrefer entre la bobine et la partie traitée.

On procède ensuite à un grenaillage intérieur libre autrement dit, plutôt que d'introduire une buse à l'intérieur du tube comme cela se pratique couramment, on projette la grenaille directement depuis une extrémité du tube, ce qui permet de bénéficier des rebonds de la grenaille à l'intérieur des coudes pour obtenir un traitement efficace. La géométrie interne de la barre favorise la création d'un écoulement turbulent de la grenaille et la multiplication des ricochets. Le traitement est effectué de part et d'autre, par chaque extrémité de la barre tubulaire. Ce grenaillage interne a pour effet d'engendrer des contraintes de compression comparables à celles qui sont obtenues par la coexistence d'une zone martensitique et d'une zone ferritoperlitique dans une barre pleine. Le traitement de grenaillage est suivi d'un traitement de protection interne. On procède ensuite au forgeage à froid des extrémités, à un grenaillage externe et aux opérations de peinture.

Dans le cas où les éléments objets du traitement n'ont pas une section circulaire, la forme de la bobine, peut être adaptée à la forme de la section de l'élément à traiter, toujours dans le but de maintenir un entrefer aussi constant que possible entre l'élément et la bobine.

Dans tous les cas le procédé se prête bien à un traitement sélectif de certaines parties de la barre en faisant notamment varier en conséquence la vitesse de déplacement de l'élément au travers de l'inducteur. On peut ainsi traiter plus spécifiquement voire uniquement les zones les plus contraintes comme par exemple les coudes et surtout les coudes principaux situées dans le prolongement de l'axe de torsion, ou encore la partie de la barre sollicitée en torsion pure ("dos" de la barre) ou encore les "avant bras" puisque les contraintes de flexion diminuent à mesure qu'on se rapproche des extrémités.

## Revendications

1. Installation de trempe thermique pour élément métallique allongé, comme par exemple un élément de suspension de véhicule automobile, **caractérisé en ce qu'**il comporte :
- des moyens de chauffage par induction (15) comprenant une bobine d'induction (16) fixe,
- des moyens de manipulation (18) comprenant un premier robot multiaxe (27) portant ledit élément métallique le robot s'oriente et se déplace pour que ledit élément s'engage progressivement dans la bobine (16) pour faire passer ledit élément au travers de ladite bobine d'induction suivant un trajet prédéterminé ainsi que pour varier l'orientation dudit élément par rapport à la bobine, et
- des moyens de refroidissement (20) agencés en aval de ladite bobine d'induction par rapport au sens de déplacement dudit élément.

2. Installation selon la revendication 1, **caractérisée en ce que** lesdits moyens de manipulation (18) sont agencés pour déplacer ledit élément de sorte qu'une fibre neutre de celui-ci traverse ladite bobine sensiblement au centre de celle-ci.

3. Installation selon la revendication 1 ou 2, **caractérisée en ce que** lesdits moyens de manipulation comportent, montés sur un support (28), des pinces escamotables (29a, 29b, 29c) espacées les unes des autres sur ledit support, pour tenir ledit élément pendant son passage au travers de ladite bobine.

4. Installation selon la revendication 3, **caractérisée en ce que** ledit support porte trois pinces précitées dont l'une (29c) est montée à coulissement libre.

5. Installation selon l'une des revendications précédentes, **caractérisée en ce que** ladite bobine d'induction (16) est sensiblement horizontale.

6. Installation selon l'une des revendications prédédentes, **caractérisée en ce que** lesdits moyens de refroidissement comportent une douche (32) de structure annulaire, dimensionnée pour pouvoir être traversée par ledit élément, ladite douche étant agencée en aval de ladite bobine d'induction (16) et à proximité de celle-ci.

7. Installation selon la revendication 6, **caractérisée en ce que** ladite douche (32) est portée par un second robot multi-axe (36) opérant en synchronisme avec ledit premier robot.

8. Installation selon l'une des revendications 6 ou 7, **caractérisée en ce que** ladite douche comporte une face d'entrée (40) formant écran, muni d'un passage central au travers duquel est engagé ledit élément, et **en ce que** ledit passage est prolongé par une cavité d'aspersion (42) dans laquelle sont installées des buses de projection (44) de fluide de refroidissement, lesdites buses étant orientées sensiblement vers l'axe dudit passage central, en aval dudit passage central.

9. Procédé de fabrication d'un élément métallique allongé, **caractérisé en ce qu'**il comporte une étape de trempe thermique consistant à faire passer ledit élément (12) au travers d'une bobine d'induction fixe (16) en le manipulant avec un robot multiaxe variant son orientation par rapport à la bobine, ladite bobine faisant partie de moyens de chauffage par induction et à refroidir l'élément en aval de ladite bobine d'induction.

10. Procédé de fabrication selon la revendication 9, **caractérisé en ce que**, ledit élément métallique allongé étant élaboré dans une barre métallique pleine, on opère une trempe superficielle pour obtenir une zone externe à structure martensitique et une zone de coeur à structure ferrito perlitique.

11. Procédé selon la revendication 9, **caractérisé en ce que** ledit élément étant élaboré dans une barre métallique tubulaire, on réalise une trempe sur une profondeur propre à créer une structure martensitique sur la totalité de l'épaisseur de ladite barre tubulaire et on procède à un grenaillage interne de ladite barre tubulaire.

12. Procédé selon la revendication 9 ou 11 **caractérisé en ce qu'**on élabore ledit élément dans une barre métallique tubulaire d'epaisseur constante.

13. Procédé selon le revendication 9 ou 11 **caractérisé en ce qu'**on élabore ledit élément dans une barre métallique tubulaire d'épaisseur variable les parties le plus épaisses de ladite barre correspondant à des zones de l'élément soumises à de plus fortes contraintes.

14. Procédé selon l'une des revendications 9 à 13 **caractérisé en ce qu'**on traite spécifiquement ou uniquement les parties de ladite barre correspondant à des zones de l'élément soumises à de plus fortes contraintes.

## Claims

1. An installation for thermal quenching an elongate metal element, for example a motor vehicle suspension element, the installation being **characterized in that** comprises:
· induction heater means (15) including a stationary induction coil (16);
· handling means (18) comprising a first multi-axis robot (27) carrying said metal element, the robot directing itself and moving so that said element enters progressively into the induction coil (16) to cause said element to pass through said induction coil following a predetermined path as well as for varying the direction of said element with regard to the induction coil; and
· cooling means (20) arranged downstream said emulsion coil in the travel direction of said element.

2. An installation according to claim 1, **characterized in that** said handling means (18) are arranged to move said element so that a neutral fiber thereof passes through said coil substantially in its center.

3. An installation according to claim 1 or claim 2, **characterized in that** said handling means include retractable clamps (29a, 29b, 29c) mounted spaced apart from one another on a support (28) in order to hold said element while it is going through said coil.

4. An installation according to claim 3, **characterized in that** said support carries three above-specified clamps, one of which (29c) is mounted to slide freely.

5. An installation according to any preceding claim, **characterized in that** said induction coil (16) is substantially horizontal.

6. An installation according to any preceding claim, **characterized in that** said cooling means comprise a shower (32) of annular structure dimensioned to be capable of having said elements pass therethrough, said shower being arranged downstream from said induction coil (16) and in the vicinity thereof.

7. An installation according to claim 6 taken together, **characterized in that** said shower (32) is carried by a second multi-axis robot (36) operating synchronously with said first robot.

8. An installation according to claim 6 or claim 7, **characterized in that** said shower has a screen-forming inlet face (40) provided with a central passage through which said element is engaged, and **in that** said passage is extended by a shower cavity (42) in which nozzles (44) are installed to spray a cooling fluid, said nozzles being directed substantially towards the axis of said central passage, downstream from said central passage.

9. A method of fabricating an elongate metal element, the method being **characterized in that** it includes a thermal quenching step consisting in causing said element (12) to pass through a stationary induction coil (16) by manipulating it with a multi-axis robot varying its direction with regard to the induction coil, said coil forming part of induction heater means, and in cooling the element downstream from said induction coil.

10. A fabrication method according to claim 9, **characterized in that** said elongate metal element is made out of a solid metal bar, and surface quenching is performed in order to obtain an external zone of martensitic structure and a core zone of ferrito-pearlitic structure.

11. A method according to claim 9, **characterized in that** said element is made out of a tubular metal bar, and quenching is performed over a depth suitable for creating a martensitic structure throughout the thickness of the wall of said tubular bar, and the inside of said tubular bar is subjected to shot-blasting.

12. Method according to claim 9, wherein said element is made out of a tubular metal bar of constant thickness.

13. Method according to claim 9, wherein said element is made out of a tubular metal bar of variable thickness, the thickest parts of said bar corresponding to regions of the element submitted to more important strains.

14. Method according to claim 9 wherein parts of said bar corresponding to regions of said elements submitted to more important strains are specifically or solely treated.

## Patentansprüche

1. Anlage zum thermischen Härten für ein langgestrecktes Metallelement, wie zum Beispiel ein Element der Aufhängung eines Kraftfahrzeugs, **dadurch gekennzeichnet, daß** sie folgendes umfaßt:
- Mittel zur Induktionserwärmung (15), die eine feste Induktionsspule (16) umfassen,
- Handhabungsmittel (18), die einen das Metallelement tragenden ersten mehrachsigen Roboter (27) umfassen, der Roboter richtet sich aus und bewegt sich, damit das Element zunehmend in die Spule (16) eingreift, um das Element entlang einem vorbestimmten Weg durch die Induktionsspule hindurchzuführen und um die Ausrichtung des Elements gegenüber der Spule zu verändern, sowie
- Kühlmittel (20), die in bezug auf die Bewegungsrichtung des Elements stromabwärts der Induktionsspule angeordnet sind.

2. Anlage nach Anspruch 1, **dadurch gekennzeichnet, daß** die Handhabungsmittel (18) angeordnet sind, um das Element derart zu bewegen, daß eine neutrale Achse dessen die Spule im wesentlichen in ihrem Zentrum durchquert.

3. Anlage nach Anspruch 1 oder 2, **dadurch gekennzeichnet, daß** die Handhabungsmittel an einem Träger (28) angebrachte und an dem Träger voneinander beabstandete einziehbare Klemmen (29a, 29b, 29c) umfassen, um das Element während seines Durchlaufs durch die Spule festzuhalten.

4. Anlage nach Anspruch 3, **dadurch gekennzeichnet, daß** der Träger drei vorgenannte Klemmen trägt, wovon eine (29c) frei verschiebbar angebracht ist.

5. Anlage nach einem der vorhergehenden Ansprüche, **dadurch gekennzeichnet, daß** die Induktionsspule (16) im wesentlichen horizontal ist.

6. Anlage nach einem der vorhergehenden Ansprüche, **dadurch gekennzeichnet, daß** die Kühlmittel eine Dusche (32) ringförmiger Struktur umfassen, die bemessen ist, um von dem Element durchquert werden zu können, wobei die Dusche stromabwärts der Induktionsspule (16) und in deren Nähe angeordnet ist.

7. Anlage nach Anspruch 6, **dadurch gekennzeichnet, daß** die Dusche (32) von einem zweiten mehrachsigen Roboter (36) getragen wird, der mit dem ersten Roboter synchron tätig ist.

8. Anlage nach einem der Ansprüche 6 oder 7, **dadurch gekennzeichnet, daß** die Dusche eine Blende bildende Eintrittsseite (40) aufweist, die mit einem mittleren Durchgang versehen ist, durch den das Element hindurch gesteckt wird, und daß der Durchgang durch einen Beregnungshohlraum (42) verlängert ist, in dem Kühlmittelspritzdüsen (44) angebracht sind, wobei die Düsen im wesentlichen zur Achse des mittleren Durchgangs, stromabwärts des mittleren Durchgangs ausgerichtet sind.

9. Verfahren zur Herstellung eines langgestreckten Metallelements, **dadurch gekennzeichnet, daß** es einen Schritt thermischen Härtens umfaßt, der darin besteht, das Element (12) durch eine feste Induktionsspule (16) hindurchzuführen, indem es mit einem mehrachsigen Roboter gehandhabt wird, der seine Ausrichtung gegenüber der Spule verändert, wobei die Spule Teil von Mitteln zur Induktionserwärmung ist, und darin, das Element stromabwärts der Induktionsspule zu kühlen.

10. Herstellungsverfahren nach Anspruch 9, **dadurch gekennzeichnet, daß** - wenn das langgestreckte Metallelement zu einer massiven Metallstange verarbeitet wird - eine Oberflächenhärtung durchgeführt wird, um einen Außenbereich mit martensitischer Struktur und einen Kernbereich mit ferritisch-perlitischer Struktur zu erhalten.

11. Verfahren nach Anspruch 9, **dadurch gekennzeichnet, daß** - wenn das Element zu einer röhrenförmigen Metallstange verarbeitet wird - eine Härtung über eine Tiefe durchgeführt wird, die geeignet ist, eine martensitische Struktur über die gesamte Dicke der röhrenförmigen Stange zu erzeugen, und ein Innensandstrahlen der röhrenförmigen Stange vollzogen wird.

12. Verfahren nach Anspruch 9 oder 11, **dadurch gekennzeichnet, daß** das genannte Element zu einer röhrenförmigen Metallstange konstanter Dicke verarbeitet wird.

13. Verfahren nach Anspruch 9 oder 11, **dadurch gekennzeichnet, daß** das genannte Element zu einer röhrenförmigen Metallstange variabler Dicke verarbeitet wird, wobei die dicksten Teile der Stange Bereichen des Elements entsprechen, die größeren Belastungen ausgesetzt sind.

14. Verfahren nach einem der Ansprüche 9 bis 13, **dadurch gekennzeichnet, daß** speziell oder einzig und allein die Teile der Stange bearbeitet werden, die Bereichen des Elements entsprechen, die größeren Belastungen ausgesetzt sind.
